# EUROPEAN PATENT APPLICATION

(11) **EP 4 800 389 A1**
(43) Date of publication of application: **02.09.2026**
(21) Application number: 25160352.8
(22) Date of filing: 26.02.2025
(51) Int. Cl.: G01N 29/265, G01N 29/44, G01N 29/11, G01N 29/07, F23J 11/00, F23J 99/00

(54) **METHOD OF INSPECTING AN INSULATED CONDUIT**

(71) Applicant: Härmä Holding Oy, 62310 Voltti (FI)
(72) Inventor: Hautala, Jari, Helsinki (FI)
(74) Representative: Wilenius, Jami Juhani

(57) **Abstract**

The invention concerns a method of inspecting an insulated conduit (20) having an inner wall (21), an outer wall (22) and an insulation layer (24) between them. The method comprises steps of determining a measuring distance to be used for measurements, determining a reference value for measurements, introducing an inspection device (10) into the insulated conduit from an end opening of the insulated conduit (20) and conducting measurements within the measuring distance inside the conduit (20), and finally comparing the results to the reference value.

## Description

### FIELD OF THE INVENTION

The invention is related to methods of inspecting conduits and especially to a method of inspecting insulated conduits.

### PRIOR ART

Insulated conduits are commonly used in various applications, where controlling temperature, preventing condensation and ensuring fire safety are critical. The insulated conduits have an inner wall, an outer wall and an insulation layer therebetween. These conduits often consist of interconnected modules, elements or blocks. Grease ducts in commercial kitchens safely vent grease-laden air while preventing fire hazards. Fume extraction ducts are often used in laboratories and factories to safely remove hazardous gases. Flue gas ducts transport combustion gases from boilers, furnaces or fireplaces, and so on. Some degree of condensation and accumulation of particles onto the inner surface of the conduit will happen and the resulting build-up can be corrosive or otherwise detrimental to the conduit. Repeated temperature changes will also degrade the conduit over time. If the insulation layer between the walls is damaged, the conduit no longer functions as intended and safety may be compromised.

The damages in both the inner wall and the insulation layer are unpredictable and difficult to inspect with conventional methods. Typically, the conduit would have to be dismantled for proper inspection of the insulation layer. Another way is to measure temperature of the outer wall which gives an indirect result of insulative properties of the conduit but oftentimes the most critical parts of the conduit are inaccessible.

For example, modern steel chimneys have an insulation layer between inner and outer walls. The inner wall is in direct contact with flue gases and subject to high temperatures that damage the inner wall over time. High temperatures also damage the insulation layer and thereby the outer wall may reach a dangerously high temperature, which is a fire hazard.

### OBJECT OF THE INVENTION

The object of the invention is to provide a method for inspecting an insulated conduit from inside the conduit without dismantling the conduit.

### SHORT DESCRIPTION OF THE INVENTION

The object of the invention is achieved with a method according to claim 1. Preferred embodiments are presented in claims 2 to 14.

### SHORT DESCRIPTION OF THE DRAWINGS

The invention is now described in more detail in connection with preferred embodiments, with reference to the accompanying drawing, of which:
Figure 1 shows a section view of an exemplary insulated conduit installation under inspection; and
Figure 2 shows a detail of a section view of an exemplary insulated conduit installation under inspection.

### DETAILED DESCRIPTION OF THE INVENTION

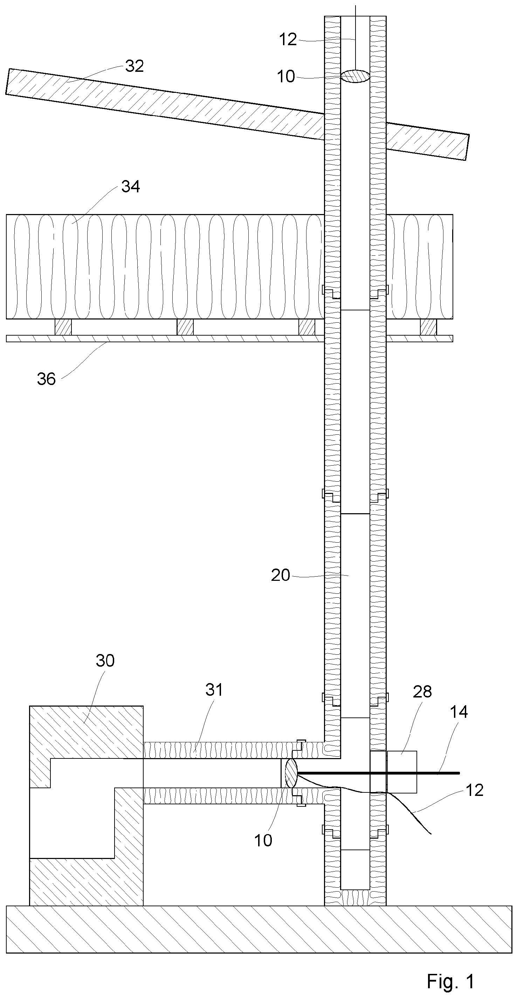

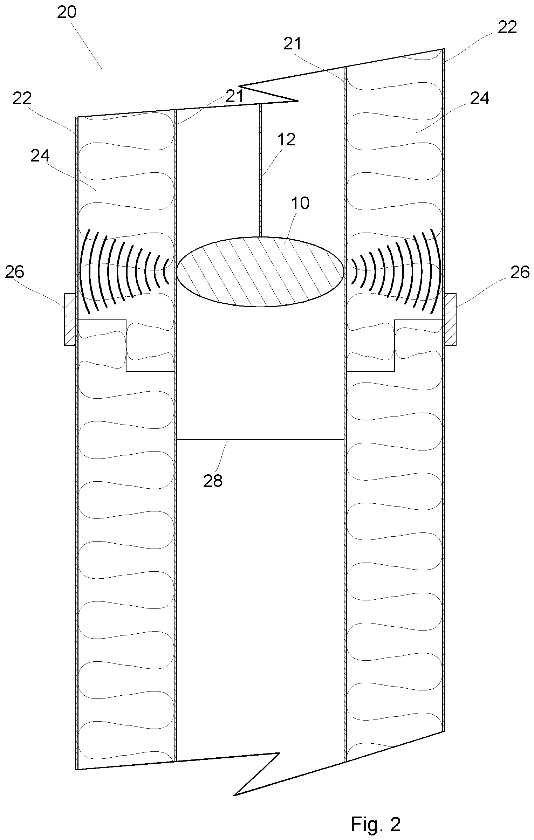

Figure 1 shows a section view of an exemplary insulated conduit installation under inspection and Figure 2 shows a detail of that.

The figures are shown only to understand the conditions under which inspections take place. The invention is not limited to the details of the figures. The method is not limited to the exemplary insulated steel chimney embodiment described in detail in the present disclosure. The method of the present disclosure is suitable for all kinds of insulated conduits, such as steel chimneys, block chimneys and flue pipes in general, as well as grease ducts, fume extraction ducts and insulated ducts in general that have an inner shell, an outer shell and an insulation layer between the inner and outer shells.

An exemplary installation in Figure 1 and Figure 2 illustrates a cross-section of a building. There is an insulated conduit 20, such as an insulated steel chimney, having a tee fitting and a horizontal extension 31 connecting the tee fitting to an exhaust on a side of a fireplace 30. If the fireplace and the insulated conduit were closer to each other, a 90° bend could be used instead of the horizontal extension and the tee fitting. The insulated conduit 20 could also be directly on top of the fireplace 30 if the exhaust of the fireplace was facing upwards on top of the fireplace. The vertical part, which is above the tee fitting in this example, comprises successive elements placed on top of one another and secured with a band 26. Between any two successive elements is a joint 28 which a potential risk structure that has to be inspected regularly. Insulated conduits often consist of interconnected modules, elements or blocks and the joints or connections between the modules, elements or blocks are prone to leaks, which is why they are considered potential risk structures and have to be regularly inspected.

In the example of Figure 1, the insulated conduit 20, the insulated steel chimney in this example, passes through a recessed ceiling 36, roof insulation 34 and a roof 32. Especially the section of the insulated conduit 20 that is surrounded by the roof insulation 34 is critical to inspect as it can't be visually inspected from the outside and also because the roof insulation prevents heat from dissipating properly from the insulated conduit. Figures 1 and 2 also depict an inspection device 10 hanging by a wire 12 in the insulated conduit. The inspection device has been introduced in to the insulated conduit from the top end opening and can be further lowered in to the insulated conduit by releasing more wire 12. The inspection device 10 can been introduced from either end opening but oftentimes the top end opening is preferable.

An aspect of the invention is a method of inspecting an insulated conduit 20, such as an insulated steel chimney, a block chimney, a flue pipe, a grease duct or a fume extraction duct. Such an insulated conduit has an inner wall 21, an outer wall 22 and an insulation layer 24 between the inner wall 21 and the outer wall 22. The method comprises a step of determining at least one measuring distance to be used for measurements. It is important to limit the distance that is measured to eliminate, or at least minimize, interference resulting from unwanted measuring of materials outside the conduit. For example, when measuring a part of conduit that is surrounded by roof insulation 34, the measuring distance should not extend into the roof insulation because it would distort results of the measurement. The measuring distance can be defined by a single distance, for example a maximum distance to be measured or by two or more distances, for example a minimum distance and a maximum distance defining a measurement interval. Preferably, one of these measuring distances is 90% to 110% of the shortest distance between the inner surface of the inner wall 21 of the insulated conduit and the outer surface of the outer wall 22 of the insulated conduit, and even more preferably about 100% or 100%. In an embodiment, the measuring distance is determined by measuring the shortest distance between the inner surface of the inner wall of the insulated conduit and the outer surface of the outer wall of the insulated conduit at the topmost part of the insulated conduit. In an embodiment, the minimum measuring distance is the inner surface of the inner wall 21 of the conduit 20 and the maximum measuring distance is the outer surface of the outer wall 22 of the conduit, i.e. the whole structure of the conduit is measured. In an embodiment, the minimum measuring distance is the outer surface of the inner wall of the conduit and the maximum measuring distance is the inner surface of the outer wall of the conduit, i.e. only the insulation layer 24 of the conduit is measured.

The method also comprises a step of determining a reference value for measurements. There are several ways of determining the reference value. In an embodiment, the reference value for measurements is determined by conducting a measurement with the inspection device 10 inside the insulated conduit 20 at the topmost part of the insulated conduit. The topmost part experiences the smallest rise of temperature during use and therefore the inner wall and the insulation in the topmost part should be the least damaged. This measurement can thus be used as the reference value for measurements. Any deviation from the reference value indicates some sort of damage as the reference value indicates the best measurement result for that specific conduit. The reference value for measurements can also be determined by selecting an existing reference value measurement for a similar insulated conduit. For example, common conduit types can be measured for reference and the reference values stored in a table of reference values. This expedites the inspection when an inspector does not have to measure the reference value on-site.

The method also comprises a step of introducing an inspection device 10 into the insulated conduit 20 from the top end of the insulated conduit. In a case of a chimney for example, the top end opening of the chimney is always accessible from a roof 32 of a building and the inspection device only has to be lowered into the chimney when the inspection device is introduced from the top end opening. This also means that the measurement can be done without entering inside the building.

Once the inspection device 10 is introduced into the insulated conduit 20, measurements are conducted within a determined measuring distance with the inspection device inside the insulated conduit. This step of conducting measurements takes place after the step of determining a measuring distance as the measuring distance is needed for conducting the measurements. However, the step of conducting measurements can take place either before or after the step of determining a reference value for the measurements.

The method further comprises a step of comparing results of the measurements to the reference value. The step of comparing results takes place after the steps of conducting measurements and determining a reference value. Any deviation from the reference value indicates at least some sort of damage as the reference value is the value that is actually measured or would be the result of measuring either a new conduit, an undamaged part of the conduit, or the least damaged part of the conduit. It is safe to assume that repeated heating and cooling cycles of the conduit do not enhance its insulative properties and thus any deviation can be interpreted as potential deterioration of the insulative properties. This step may also include measurements to determine insulative properties of the insulation layer 24 of the insulated conduit 20. This can be achieved, for example, by using measuring distances which only cover the insulation layer and comparing results of the measurements to a reference value measured in the same manner from the topmost part of the conduit. The topmost part refers to the flow direction of gases or fluids in the conduit and it could also be understood as the outermost part or the furthest part from the fluid source.

The inspection device 10 can be assembled by a person skilled in the art by combining or modifying devices known from the prior art for inspection various materials or structures. The inspection device may for example comprise one or more ultrasound devices for sending and receiving ultrasound signals. In this embodiment, the inspection device 10 would send ultrasound signals and receive reflections of the signals. The received reflections are then analyzed based on attenuation and delay between sending and receiving the signal to determine which parts of the wall structure of the conduit 20 have deteriorated and by how much. The delay and intensity of the reflection give information about density and uniformity of measured structures or materials. Other possible sensors and devices include for example X-ray, which can penetrate the inner wall of the conduit, and microwave frequencies, which is mostly useful for finding leaks in the inner wall of the conduit. Also, other types of sensors can be used. When using the ultrasound devices, it is preferable that the inspection device is positioned in physical contact with the inner surface of the inner wall of the insulated conduit. The ultrasound propagates much more efficiently into the insulation layer if the ultrasound device is in physical contact with the inner wall. Similarly, reflections can be detected much better if the ultrasound device is in physical contact with the inner wall.

The inspection device 10 is preferably adapted for conducting measurements in radial direction of the conduit 20. The measurements can be conducted a series of individual measurements or the measuring can be continuous. The measurements can be conducted in all radial directions or in several radial directions simultaneously using multiple ultrasound devices, or the measurements can be conducted sector-by-sector over the whole radial range with one or more ultrasound devices. The inspection device can be lowered into the conduit by a wire 12 or by a rope or similar. The wire 12 can be connected to a position indicator that indicates the position of the inspection device by measuring the length of the wire passed through the position indicator. The position indicator can be a digital indicator or an analog indicator indicating the position on a display or by sending a signal representing the position. The signal can be sent with known short distance radio frequency communications, such as Bluetooth or Wi-Fi, that can be received by e.g. a mobile phone, or sent by a wired connection. The inspection device 10 can also send measurement results with known short distance radio frequency communications, such as Bluetooth or Wi-Fi, that can be received by e.g. a mobile phone, or by a wired connection. The wire 12, which is used for lowering the inspection device in to the conduit, can include suitable data wiring to for transmitting measurement results. The inspection device 10 can also a local memory to store measurement results which can then be transferred to other devices once the inspection device has been removed from the conduit.

Insulated conduits may have horizontal sections, or more generally non-vertical sections, that need to be inspected as well. An example of such a section is the horizontal extension 31 shown in Figure 1. Since the inspection device 10 is lowered by e.g. the wire 12, the non-vertical sections may require further means for guiding the inspection device through the non-vertical sections. A chimney sweeper faces a very similar problem as the chimney brush is also lowered into the chimney from the top end opening of the chimney. Because of that, one or more sweep access hatches 28 may have been installed to reach such sections if they exist. If needed, a sweep access hatch can be installed prior to the inspection. Other types of insulated conduits often have similar access hatches for similar maintenance purposes. The sweep access hatches 28 can be used for guiding the inspection device 10. The inspection device may have attaching means, such as a threaded insert, a magnet or a coupling, for attaching a guide bar 14. The guide bar is preferably a rigid guide bar, such as a guide bar made of aluminum or steel, or a semi-rigid guide bar, such as a guide bar comprising glass fibers or carbon fibers and/or plastic. When needed, a sweep access hatch 28 is opened and the guide bar 14 is attached to the inspection device 10. Using the guide bar, the inspection device is pushed through the non-vertical section of the conduit while conducting measurements, preferably conducting measurements within a determined measuring distance. The guide bar can also be used when lowering the inspection device into the conduit from the top end opening of the conduit. The guide bar 14 may be extendable by adding another section as needed. Connections between the sections of the guide bar may be realized for example with threaded parts at the ends of the sections.

The method of inspecting an insulated conduit may further comprise a step of linking the position of the inspection device within the insulated conduit with a measurement result that deviates from the reference value by a predetermined margin. This can be achieved for example by using the position indicator. The end result would then indicate possible damaged parts with a position information. The damaged part can be a deteriorated section in the insulation layer or a leak in the conduit. Leaks in insulated conduits often appear on the joints or connections between the modules, elements or blocks, which is why they are considered potential risk structures and have to be regularly inspected. The position information can be for example a distance from an end of the conduit, such as the top end of the conduit.

The method of inspecting an insulated conduit may also comprise a step of acquiring technical data of the insulated conduit under inspection, and a step of estimating a remaining safe-life for the insulated conduit under inspection based on the acquired technical data and results of the conducted measurements. This may be realized by collecting measurement data over a relatively long time period to increase accuracy of the estimated safe-life. Once a conduit is deemed not safe, the previous measurement results can be analyzed and added to a database to increase accuracy of the estimation. The estimation can then be based on said database to predict results of future measurements and when a future measurement would not result acceptable results anymore.

To a skilled person in the art, it is obvious that the basic idea of the invention can be implemented in various ways, as technology and materials develop. The invention and its embodiments are therefore not limited to only the examples presented above; rather they may vary within the scope of the claims.

## Claims

1. A method of inspecting an insulated conduit (20) having an inner wall (21), an outer wall (22) and an insulation layer (24) between said inner wall (21) and outer wall (22), wherein the method comprises steps of:
determining at least one measuring distance to be used for measurements, determining a reference value for measurements,
introducing an inspection device (10) into the insulated conduit from an end opening of the insulated conduit (20),
conducting measurements within a determined measuring distance with the inspection device (10) inside the insulated conduit (20), and
comparing results of said measurements to said reference value.

2. The method of claim 1, where a measuring distance of the at least one measuring distance is 90% to 110% of the shortest distance between the inner surface of the inner wall (21) of the insulated conduit (20) and the outer surface of the outer wall (22) of the insulated conduit (20).

3. The method of claim 1, where a measuring distance of the at least one measuring distance is determined by measuring the shortest distance between the inner surface of the inner wall (21) of the insulated conduit (20) and the outer surface of the outer wall (22) of the insulated conduit (20) at the topmost part of the insulated conduit (20).

4. The method of any one of claims 1 to 3, wherein the reference value for measurements is determined by conducting a measurement with the inspection device (10) inside the insulated conduit (20) at the topmost part of the insulated conduit (20).

5. The method of any one of claims 1 to 3, wherein the reference value for measurements is determined by selecting an existing reference value measurement for a similar insulated conduit (20).

6. The method of any one of claims 1 to 5, wherein the inspection device (10) comprises one or more ultrasound devices for sending and receiving ultrasound signals.

7. The method of claim 6, wherein the step of conducting measurements comprises positioning the inspection device (10) in physical contact with the inner surface of the inner wall (21) of the insulated conduit (20).

8. The method of any one of claims 1 to 7, wherein the method further comprises a step of determining a position of the inspection device (10) within the insulated conduit (20).

9. The method of claim 8, wherein the method further comprises a step of linking the position of the inspection device (10) within the insulated conduit (20) with a measurement result that deviates from the reference value by a predetermined margin.

10. The method of any one of claims 1 to 9, where the step of conducting measurements comprises measurements to determine insulative properties of the insulation layer (24) of the insulated conduit (20).

11. The method of any one of claims 1 to 10, wherein the method further comprises a step of acquiring technical data of the insulated conduit (20) under inspection, and a step of estimating a remaining safe-life for the insulated conduit (20) under inspection based on the acquired technical data and results of the conducted measurements.

12. The method of any one of claims 1 to 11, where the inspecting device (10) comprises multiple ultrasound devices for conducting measurements in multiple radial directions.

13. The method of any one of claims 1 to 12, where the insulated conduit (20) is an insulated steel chimney.

14. The method of claim 13, wherein in the step of introducing an inspection device (10) into the insulated conduit from an end opening of the insulated conduit (20), the inspection device (10) is inserted into the insulated steel chimney from a top end opening of the insulated steel chimney.
